# EUROPÄISCHE PATENTSCHRIFT

(11) **EP 2 002 912 B1**
(45) Veröffentlichungstag und Bekanntmachung des Hinweises auf die Patenterteilung: **28.11.2012**
(21) Anmeldenummer: 08010416.9
(22) Anmeldetag: 09.06.2008
(51) Int. Cl.: B23D 47/02, B27B 27/08, B27B 27/10

(54) **Auslegertisch für eine Format- bzw. Plattensäge**
Cantilever table for a final trimming or panel saw
Table en porte-à-faux pour une scie à deligner ou une scie à panneaux

(30) Priorität: 14.06.2007 AT 9242007
(43) Veröffentlichungstag der Anmeldung: 17.12.2008
(73) Patentinhaber: Felder KG, 6060 Hall in Tirol (AT)
(72) Erfinder: Felder, Johann, 6060 Hall in Tirol (AT)
(74) Vertreter: Hofinger, Stephan

(56) Entgegenhaltungen:
- DE-A1- 1 628 864
- DE-A1- 10 325 063
- DE-U1- 9 207 811
- FR-A1- 2 451 254
- US-A- 4 213 364
- US-A1- 2005 056 130

## Beschreibung

Die vorliegende Erfindung betrifft einen Auslegertisch für eine Format- bzw. Plattensäge gemäβ dem Obesbegriff des Patenanspruchs 1, an dem ein Anschlag für das zu bearbeitende Werkstück angeordnet ist, wobei der Anschlag um eine in Bezug auf den Auslegertisch insbesondere ortsfeste Drehachse relativ zum Sägeblatt verschwenkbar und auf bzw. an einem Basiselement, welches relativ zum Auslegertisch verschiebbar mit diesem verbunden ist, lagefixierbar ist, wobei die Auflagefläche des Basiselementes in der Ebene der Auflagefläche des Auslegertisches angeordnet ist.

Ein derartiger Auslegertisch geht beispielsweise aus der US 2005/0056130 A1 hervor.

Der Auslegertisch einer Format bzw. Plattensäge stellt eine seitliche Verlängerung der Sägetischfläche dar und dient als Auflage für das zu bearbeitende Werkstück, wobei die Auflagefläche des Auslegertisches in derselben Ebene liegt wie der Sägetisch und der Auslegertisch in der Regel in Längsrichtung des Sägeplattes parallel zum Sägetisch verschiebbar an diesem angeordnet ist.

Insbesondere bei der Verwendung eines auf dem Auslegertisch anzuordnenden Anschlages für das zu bearbeitende Werkstück ergibt sich bei den aus dem Stand der Technik bekannten Auslegertischen das Problem, dass sich in Folge des Verschwenkens des Anschlages die Auflagefläche des Auslegertisches für das zu bearbeitende Werkstück verkleinert.

Zur Umgehung dieses Problems ist es bereits bekannt, den Rahmen eines Auslegertisches als Parallelogramm zu verschieben, was neben dem damit verbundenen Mehraufwand auch zu Ungenauigkeiten in Folge der Instabilität eines solchen Auslegerahmens führen kann.

Eine andere Lösung zeigt die DE 29 10 095 A1, gemäß der zwei parallele Auflagetische vorgesehen sind.

Ausgehend von diesem Stand der Technik hat es sich die Erfindung zur Aufgabe gemacht, einen Auslegertisch der vorgenannten Art dahingehend zu verbessern, dass die Beibehaltung der Größe der Auflagefläche auch bei Verwendung eines schwenkbaren Anschlages auf einfache Weise möglich ist und der zudem eine exakte Winkeleinstellung bei stabilem Auslegerahmen erlaubt.

Erfindungsgemäß wird diese Aufgabe durch einen Ausgestisch gemäβ Anspruch 1 gelöst. Indem das Basiselement am Auslegertisch verschiebbar angeordnet ist, ist das Basiselement mittels eines Arretiermechanismus am Auslegertisch lagefixierbar und der Anschlag über eine vom Arretiermechanismus gesonderte Klemmeinrichtung am Basiselement festlegba.

Dadurch, dass der Anschlag mit dem Basiselement gekoppelt und lagefixierbar, insbesondere ortsfest drehbar, verbunden ist, wandert das Basiselement bei einer Verschwenkung des Anschlages mit, sodass die Auflagefläche des Basiselementes für das Werkstück auch bei verschwenktem Anschlag im Wesentlichen gleich groß bleibt, ohne dass der Rahmen des Auslegertisches verändert werden muss, wodurch eine stabile und exakte Führung des Auslegertisches gegenüber dem Sägetisch gewährleistet bleibt. Dadurch dass, die Auflagefläche des Basiselementes in der Ebene der Auflagefläche des Auslegertisches angeordnet ist, wird eine exakte Führung des Werkstückes und damit ein sauberes Schnittbild erreicht.

Eine konstruktiv einfache und für den Benutzer bedienerfreundliche Lösung wird vorzugs weise dann erreicht, wenn das Basiselement in Verschieberichtung des Auslegertisches verschiebbar an diesem angeordnet ist.

Im Sinne einer exakten Winkeleinstellung und zur Vermeidung übermäßiger Materialabnutzung im Bereich der Lagerstelle des Anschlages mit dem Basiselement ist erfindungsgemäß weiters vorgesehen, dass das Basiselement mittels eines Arretiermechanismus gegenüber dem Auslegertisch lagefixierbar ist, wobei eine konstruktiv einfache Lösung dann erreicht wird, wenn der Arretiermechanismus von einer vorzugsweise mittels eines Schwenkhebel betätigbaren Klemmeinrichtung gebildet ist.

Gemäß einer weiteren Ausführungsform der Erfindung ist vorgesehen, dass die Fixierung des Anschlages relativ zum Auslegertisch mittels eines auf der Unterseite des Anschlages in Längsrichtung desselben verschiebbar gelagerten Führungselementes, welches in eine am Basiselement ausgebildete Aufnahmeöffnung eingreift, erfolgt, wobei eine konstruktiv einfache Lösung dann erreicht wird, wenn das Führungselement in einer an der Unterseite des Anschlages angeordneten vorzugsweise nutförmigen länglichen Führung verschieb- und lagefixierbar gelagert ist, wobei es sich als besonders günstig herausgestellt hat, wenn die Aufnahmeöffnung am Basiselement zur lagefixierbaren Aufnahme des am Anschlag ausgebildeten Führungselementes ausgebildet.

Eine alternative Ausführungsform der Erfindung sieht vor, dass die Fixierung des Anschlages relativ zum Auslegertisch mittels eines auf dem Basiselement angeordneten Führungszapfens, der in wenigstens eine an der Unterseite des Anschlages ausgebildete Aufnahmeöffnung eingreift, erfolgt.

Bei dieser zweiten Ausführungsvariante ist gemäß einem ersten Ausführungsbeispiel vorgesehen, dass die Aufnahmeöffnung auf der Unterseite des Anschlages von einer vorzugsweise nutförmigen, länglichen Führung gebildet ist, die sich in Längsrichtung des Anschlages erstreckt und zur verschieb- und lagefixierbaren Aufnahme des am Basiselement ausgebildeten Führungszapfens ausgebildet ist, während eine zweite Ausführungsform vorsieht, dass auf der Unterseite des Anschlages mehrere in Längsrichtung des Anschlages voneinander beabstandete Aufnahmeöffnungen, vorzugsweise Sackbohrungen, ausgebildet sind.

Es kommt also im Wesentlichen nicht darauf an, in welchem der beiden Teile, dem Anschlag bzw. dem Basiselement, das Führungselement bzw. die Aufnahmeöffnung ausgebildet ist, vielmehr besteht eine Grundidee der Erfindung darin, das verschiebbare Basiselement mit dem verschwenkbaren Anschlag zu koppeln und diese beiden Teile in einem frei wählbaren Schwenkwinkel gegeneinander zu fixieren.

Wenn gleich die Skala zum Einstellen des Schwenkwinkels für den Anschlag auch am Sägetisch angeordnet sein kann, sieht ein bevorzugtes Ausführungsbeispiel der Erfindung vor, diese Skala am verschiebbaren Basiselement oder am Auslegetisch anzuordnen.

Weiters betrifft die Erfindung eine Format- bzw. Plattensäge mit einem erfindungsgemäßen Auslegertisch.

Weitere Vorteile und Einzelheiten der Erfindung werden in der nachfolgenden Figurenbeschreibung unter Bezugnahme auf die in den Zeichnungen dargestellten Ausführungsbeispielen näher erläutert, Darin zeigt:
- Fig. 1a und b: schematisch die Anordnung eines Auslegertisches an einem Sägetisch einer Format- bzw. Plattensäge mit einem Anschlag in zwei verschiedenen Einstellungen,
- Fig. 2: einen Anschlag in Seitenansicht,
- Fig. 2a: die Anordnung des Anschlages aus Fig. 2 auf einem Auslegertisch in Seitenansicht und
- Fig. 2b: eine vergrößerte Darstellung des Details D aus Fig. 2a.

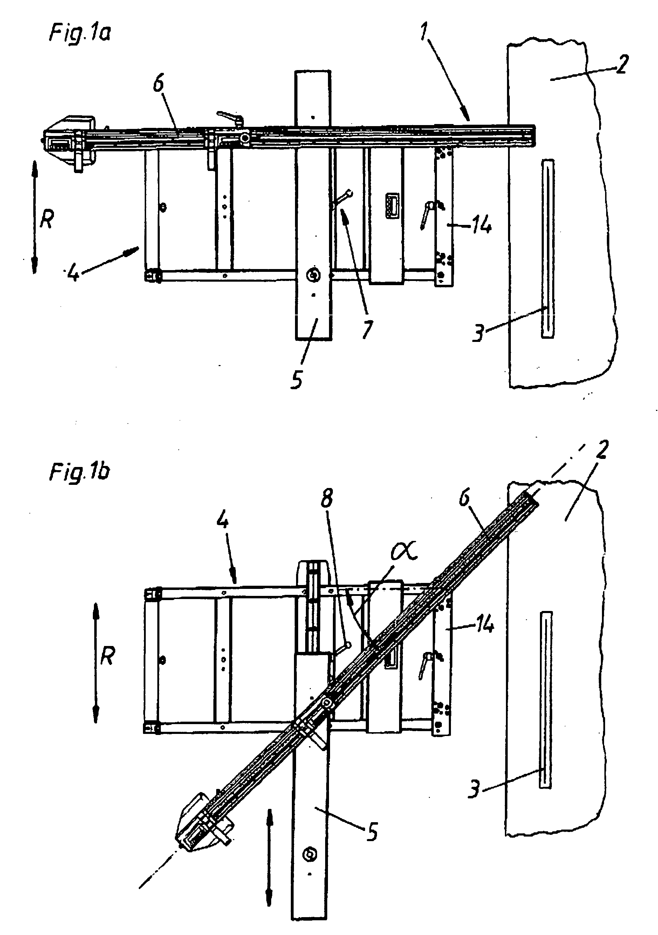

In den Fig. 1a und 1b ist in Draufsicht ein Teilabschnitt einer Format- bzw. Plattensäge 1 dargestellt, bei der ein Auslegertisch 4 relativ zum Sägetisch 2 verschiebbar angeordnet ist, wobei die Schieberichtung R parallel zur Längsrichtung des Sägeblatts 3 verläuft. Am Auslegertisch 4 ist ein Anschlag 6, auch Ablänganschlag genannt, montiert, bei dem das nicht dargestellte Werkstück zum Schneiden angeschlagen wird. Der Anschlag 6 ist um den Schwenkwinkel α relativ zum Sägeblatt 3 verschwenkbar, wobei der Scliwenkvvinkel α in der Fig. 1a 90° und in der Fig. 1b 45° beträgt.

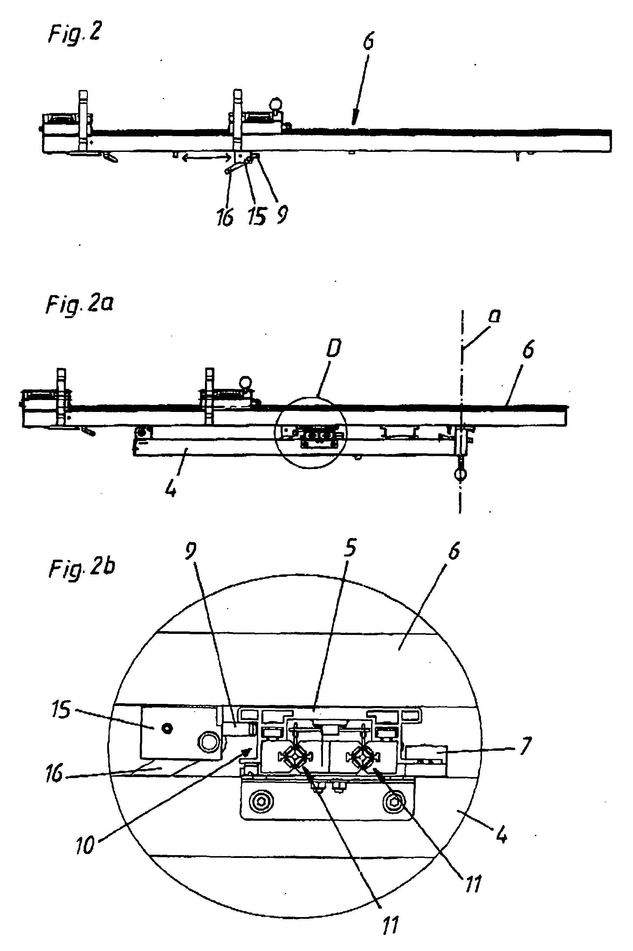

Der Drehpunkt des Anschlages 6 ist beim gezeigten Ausführungsbeispiel auf einer Montageschiene 14, die am Auslegertisch 4 befestigbar ist, gelagert, sodass der Anschlag um die Drehachse a (Fig. 2a) relativ zum Auslegertisch 4 verschwenkt werden kann. Der zweite Aufnahmepunkt für den Anschlag 6 auf dem Auslegertisch 4 ist auf dem verschiebbaren Basiselement 5 gelagert, sodass eine Änderung des Schwenkwinkels α sowohl über eine Verschwenkung des Anschlages 6 als auch über eine Verschiebung des Basiselementes 5 erreicht werden kann.

Wie aus Fig. 1b ersichtlich, wird durch die Erfindung erreicht, dass die vor dem Anschlag 6 befindliche Auflagefläche F des verschiebbaren Basiselementes 5 in beiden dargestellten Stellungen des Anschlages 6 im Wesentlichen gleich groß ist.

In Fig. 2 ist der Anschlag 6 in einer Seitenansicht dargestellt. Auf der Unterseite des Anschlages 6 ist ein Klemmbacken 15 mit dem Führungselement 9 in einer Nut verschiebbar gelagert. Die Lagefixierung des Anschlages 6 gegenüber dem verschiebbaren Basiselement 5 erfolgt also über den Klemmbacken 15, der mittels eines Schwenkhebels 16 betätigbar ist. In gleicher Art erfolgt die Festlegung des verschiebbaren Basiselementes 5 gegenüber dem Auslegertisch 4, wobei der entsprechende Arretiermechanismus 7 über den Schwenkhebel 8 betätigbar ist (Fig. 1 b).

In den Fig. 2a und 2b ist die Anordnung des Anschlages 6 auf dem Auslegertisch 4 dargestellt, wobei aus Fig. 2a die Drehachse a, um die der Anschlag 6 schwenkbar ist, ersichtlich ist.

Aus Fig. 2b ist ersichtlich, dass das Basiselement 5 in zwei Walzenkäfigen 11 einer Linearführung am Auslegeftisch 4 verschiebbar gelagert ist. Die Festlegung des Basiselementes 5 gegenüber dem Auslegertisch 4 erfolgt über den in Form einer Klemmeinrichtung ausgebildeten Arretiermechanismus 7. Analog dazu erfolgt die Festlegung des Anschlages 6 gegenüber dem Basiselement 5 ebenfalls über eine Klemmeinrichtung, die einen über den Schwenkhebel 16 betätigbaren Klemmbacken 15 umfasst.

Die dargestellten Ausführungsbeispiele von Auslegertischen für Format- bzw. Plattensägen sind selbstverständlich nicht in einschränkendem Sinne zu verstehen, sondern eben nur einzelne Beispiele von zahlreichen Möglichkeiten die in den Ansprüchen definierte Erfindung zu realieren. So wäre beispielsweise die Führung des Anschlages in einem Langloch oder aber auch die Möglichkeit, den Anschlag auf die gegenüberliegende Seite umsetzen zu können, durchaus denkbar und im Sinne der Erfindung.

## Patentansprüche

1. Auslegertisch (4) für eine Format- bzw. Plattensäge, an dem ein Anschlag (6) für das zu bearbeitende Werkstück angeordnet ist, wobei der Anschlag (6) um eine in Bezug auf den Auslegertisch (4) insbesondere ortsfeste Drehachse (a) relativ zum Sägeblatt (3) verschwenkbar und auf bzw. an einem Basiselement (5) des Auslegertisches (4), welches relativ zum Auslegertisch (4) verschiebbar mit diesem verbunden ist, lagefixierbar ist, wobei die Auflagefläche (F) des Basiselementes (5) in der Ebene der Auflagefläche (F) des Auslegertisches (4) angeordnet ist, wobei das Basiselement (5) am Auslegertisch (4) verschiebbar angeordnet und das Basiselement (5) mittels eines Arretiermechanismus (7), am Auslegertisch (4) lagefixierbar ist, **gekennzeichnet durch** eine von Arretiermechanis mus (7) gesondeste Klemmeinrichtung (15,16), wobei der Anschlag (6) über die vorn Arretiermechanismus (7) gesonderte Klemmeinrichtung (15, 16) am Basiselement (5) festlegbar ist.

2. Auslegertisch nach Anspruch **1**, **dadurch gekennzeichnet, dass** das Basiselement (5) in Verschieberichtung (R) des Auslegertisches (4) verschiebbar ist.

3. Auslegertisch nach Anspruch 1 oder 2, **dadurch gekennzeichnet, dass** der Arretiermechanismus (7) von einer vorzugsweise mittels eines Schwenkhebel (8) betätigbaren Klemmeinrichtung gebildet ist.

4. Auslegertisch nach einem der Ansprüche 1 bis 3, **dadurch gekennzeichnet, dass** die Fixierung des Anschlages (6) relativ zum Auslegertisch (4) mittels eines auf der Unterseite des Anschlages (6) in Längsrichtung desselben verschiebbar gelagerten Führungselementes (9), welches in eine am Basiselement (5) ausgebildete Aufnahmeöffnung (10) eingreift, erfolgt.

5. Auslegertisch nach Anspruch 4, **dadurch gekennzeichnet, dass** das Führungselement (9) in einer an der Unterseite des Anschlages (6) angeordneten vorzugsweise nutförmigen länglichen Führung verschieb- und lagefixierbar gelagert ist.

6. Auslegertisch nach Anspruch 4 oder 5, **dadurch gekennzeichnet, dass** die Aufnahmeöffnung (10) am Basiselement (5) zur lagefixierbaren Aufnahme des am Anschlag (6) ausgebildeten Führungselementes (9) ausgebildet ist.

7. Auslegertisch nach einem der Ansprüche 1 bis 6, **dadurch gekennzeichnet, dass** die Fixierung des Anschlages (6) relativ zum Auslegertisch (4) mittels eines auf dem Basiselement (5) angeordneten Führungszapfens, der in wenigstens eine an der Unterseite des Anschlages (6) ausgebildete Aufnahmeöffnung eingreift, erfolgt.

8. Auslegertisch nach Anspruch 7, **dadurch gekennzeichnet, dass** die Aufnahmeöffnung auf der Unterseite des Anschlages (6) von einer vorzugsweise nutförmigen länglichen Führung gebildet ist, die sich in Längsrichtung des Anschlages (6) erstreckt und zur verschieb- und lagefixierbaren Aufnahme des am Basiselement (5) ausgebildeten Führungszapfens ausgebildet ist.

9. Auslegertisch nach Anspruch 7, **dadurch gekennzeichnet, dass** auf der Unterseite des Anschlages (6) mehrere in Längsrichtung des Anschlages (6) voneinander beabstandete Aufnahmeöffnungen, vorzugsweise Sackbohrungen, ausgebildet sind.

10. Auslegertisch nach einem der Ansprüche 1 bis 9, **dadurch gekennzeichnet, dass** am Basiselement (5) oder am Auslegertisch (4) eine Skala zum Einstellen des Schwenkwinkels (α) für den Anschlag (6) angeordnet ist.

11. Format- bzw. Plattensäge, **gekennzeichnet durch** einen Auslegertisch (4) nach einem der Ansprüche 1 bis 10.

## Claims

1. A cantilever table (4) for a trimming or panel saw, on which an abutment (6) for the workpiece to be machined is arranged, wherein the abutment (6) is pivotable relative to the saw blade (3) about an axis of rotation (a) which in particular is stationary in position relative to the cantilever table (4) and can be fixed in position on or to a base element (5) of the cantilever table (4), which is connected to the cantilever table (4) displaceably relative thereto, wherein the support surface (F) of the base element (5) is arranged in the plane of the support surface (F) of the cantilever table (4), wherein the base element (5) is arranged displaceably on the cantilever table (4) and the base element (5) can be fixed in position on the cantilever table (4) by means of an arresting mechanism (7), **characterised by** a clamping device (15, 16) which is separate from the arresting mechanism (7), wherein the abutment (6) can be fixed on the base element (5) by way of the clamping device (15, 16) which is separate from the arresting mechanism (7).

2. A cantilever table according to claim 1 **characterised in that** the base element (5) is displaceable in the direction of displacement (R) of the cantilever table (4),

3. A cantilever table according to claim 1 or claim 2 **characterised in that** the arresting mechanism (7) is formed by a clamping device actuable preferably by means of a pivotal lever (8).

4. A cantilever table according to one of claims 1 to 3 **characterised in that** fixing of the abutment (6) relative to the cantilever table (4) is effected by means of a guide element (9) which is mounted on the underside of the abutment (6) displaceably in the longitudinal direction thereof and which engages into a receiving opening (10) on the base element (5).

5. A cantilever table according to claim 4 **characterised in that** the guide element (9) is mounted displaceably and fixably in position in a preferably groove-shaped elongate guide arranged at the underside of the abutment (6).

6. A cantilever table according to claim 4 or claim 5 **characterised in that** the receiving opening (10) is provided on the base element (5) for positionally fixably receiving the guide element (9) provided on the abutment (6).

7. A cantilever table according to one of claims 1 to 6 **characterised in that** fixing of the abutment (6) relative to the cantilever table (4) is effected by means of a guide projection which is arranged on the base element (5) and which engages into at least one receiving opening at the underside of the abutment (6).

8. A cantilever table according to claim 7 **characterised in that** the receiving opening is formed on the underside of the abutment (6) by a preferably groove-shaped elongate guide which extends in the longitudinal direction of the abutment (6) and is adapted for displaceably and positionally fixably receiving the guide projection on the base element (5).

9. A cantilever table according to claim 7 **characterised in that** provided on the underside of the abutment (6) are a plurality of receiving openings, preferably blind bores, spaced from each other in the longitudinal direction of the abutment (6).

10. A cantilever table according to one of claims 1 to 9 **characterised in that** a scale for setting the pivotal angle (α) for the abutment (6) is arranged on the base element (5) or the cantilever table (4).

11. A trimming or panel saw **characterised by** a cantilever table (4) according to one of claims 1 to 10.

## Revendications

1. Table en porte-à-faux (4) pour une scie à déligner ou à panneaux, sur laquelle est disposée une butée (6) pour la pièce à usiner, ladite butée (6) pouvant basculer relativement à la lame de scie (3) autour d'un axe de rotation (a), notamment fixe par rapport à la table en porte-à-faux (4), et sa position pouvant être fixée sur ou contre un élément de base (5) de la table en porte-à-faux (4), lequel est raccordé à la table en porte-à-faux (4) de manière à être déplaçable par rapport à celle-ci, la surface d'appui (F) de l'élément de base (5) étant située sur le plan de la surface d'appui (F) de la table en porte-à-faux (4), l'élément de base (5) étant disposé de manière à être déplaçable contre la table en porte-à-faux (4) et la position de l'élément de base (5) pouvant être fixée au moyen d'un mécanisme de maintien (7) sur la table en porte-à-faux (4), **caractérisée par** un dispositif de serrage (15, 16) séparé du mécanisme de maintien (7), la butée (6) pouvant être bloquée sur l'élément de base (5) au moyen dudit dispositif de serrage (15, 16) séparé du mécanisme de maintien (7).

2. Table en porte-à-faux selon la revendication 1, **caractérisée en ce que** l'élément de base (5) est déplaçable dans la direction de déplacement (R) de la table en porte-à-faux (4).

3. Table en porte-à-faux selon la revendication 1 ou 2, **caractérisée en ce que** le mécanisme de maintien (7) est formé par un dispositif de serrage préférentiellement actionné au moyen d'un levier basculant (8).

4. Table en porte-à-faux selon l'une des revendications 1 à 3, **caractérisée en ce que** la fixation de la butée (6) par rapport à la table en porte-à-faux (4) est effectuée au moyen d'un élément de guidage (9) monté sur la face inférieure de la butée (6) en étant mobile dans le sens de la longueur de celle-ci, lequel s'engage dans une ouverture de réception (10) formée sur l'élément de base (5).

5. Table en porte-à-faux selon la revendication 4, **caractérisée en ce que** l'élément de guidage (9) est monté dans un guidage longitudinal préférentiellement en forme de rainure disposé sur la face inférieure de la butée (6), de manière à pouvoir être mis en mouvement et immobilisé.

6. Table en porte-à-faux selon la revendication 4 ou 5, **caractérisée en ce que** l'ouverture de réception (10) sur l'élément de base (5) est réalisée pour la réception, immobilisable, de l'élément de guidage (9) formé sur la butée (6).

7. Table en porte-à-faux selon l'une des revendications 1 à 6, **caractérisée en ce que** la fixation de la butée (6) par rapport à la table en porte-à-faux (4) est effectuée au moyen d'un tenon de guidage disposé sur l'élément de base (5), lequel s'engage dans au moins une ouverture de réception formée sur la face inférieure de la butée (6).

8. Table en porte-à-faux selon la revendication 7, **caractérisée en ce que** l'ouverture de réception sur la face inférieure de la butée (6) est formée par un guidage longitudinal préférentiellement en forme de rainure, lequel s'étend dans le sens de la longueur de la butée (6) et est prévu pour la réception du tenon de guidage formé sur l'élément de base (5) de manière à permettre la mise en mouvement et l'immobilisation de celui-ci.

9. Table en porte-à-faux selon la revendication 7, **caractérisée en ce que** plusieurs ouvertures de réception, préférentiellement des alésages borgnes, espacées les unes des autres, sont formées sur la face inférieure de la butée (6) dans le sens de la longueur de la butée (6).

10. Table en porte-à-faux selon l'une des revendications 1 à 9, **caractérisée en ce qu'**une graduation pour le réglage de l'angle de basculement (α) de la butée (6) est disposée sur l'élément de base (5) ou sur la table en porte-à-faux (4).

11. Scie à déligner ou à panneaux, **caractérisée par** une table en porte-à-faux (4) selon l'une des revendications 1 à 10.
